# EUROPEAN PATENT APPLICATION

(11) **EP 2 579 079 A1**
(43) Date of publication of application: **10.04.2013**
(21) Application number: 11789166.3
(22) Date of filing: 30.05.2011
(51) Int. Cl.: G02B 6/52

(54) **OPTICAL CABLE STRUCTURE FOR AIR BLOWN INSTALLATION AND MANUFACTURE METHOD THEREOF**

(30) Priority: 31.05.2010 CN 201020209794 U
(71) Applicant: Sichuan Huiyuan Optical Communications Co., Ltd, Chengdu, Sichuan 611731 (CN)
(72) Inventor: LIU, Zhongyi, Chengdu Sichuan 611731 (CN)
(74) Representative: Gulde Hengelhaupt Ziebig & Schneider
(86) International application number: PCT/CN2011/074846
(87) International publication number: WO 2011/150787

(57) **Abstract**

The invention discloses an optical cable structure suitable for air blowing installation and a manufacturing method thereof. The optical cable structure comprises at least one optical fiber unit (3) and a sheath (1) which is coated on the optical fiber unit (3); the interior of the optical fiber unit (3) comprises at least one optical fiber (4); the surface of the sheath (1) is provided with a plurality of convex or concave patterns (9); letters are printed on the convex or concave patterns (9) and between the convex or concave patterns (9); at least one non-metal wire bundle (2) is arranged between the sheath (1) and the optical fiber unit (3), and comprises one or multiple of binding yarn, a tearing rope, aramid yarn and glass fiber yarn; the adjacent part of the optical fibers (4) comprises a reinforced rod(5) and a filling rope (6); and the convex or concave patterns (9) and the optical cable are in longitudinal and parallel arrangement, spiral arrangement with certain angle, or positive and reverse staggering spiral arrangement with certain angle. According to the invention, the air blowing distance of the optical cable can be enhanced greatly, the construction period can be shortened, the construction cost can be lowered, and the printed letters on the surface can be protected effectively.

## Description

### Technical Field

The invention relates to an optical cable structure suitable for air blowing installation and a manufacturing method thereof.

### Background Art

Since 1980s, the British telecom has put forward the concept of the air blowing optical fiber unit firstly. The technology of air blowing optical cable system is improved increasingly, and is mature now. The air blowing optical cable system is an optical cable installation technology by utilizing compressed air from an air compressor through blowing the optical fiber unit into an installed hollow pipe by an air blowing head.

Recently, the Fiber to The Home develops fast, and network construction is carried out on a large scale for each country installing the optical cable in a pipeline by an air blowing method becomes a main means for the communication network construction. At present, in most northern European countries, no matter the construction of a backbone network or a metropolitan area network, 70% of optical cables are laid by the air blowing method.

The rapid development of the communication industry brings more fierce competition. All of the communication operators are engaged in network construction on a large scale, and meanwhile begin to pay attention to and seek all possibilities for lowering the network construction cost, and now many operators proposed that optical cables with more optical fiber cores are installed in a smaller pipeline, and the air blowing distance can not be shortened, wherein the most common requirement is that an optical cable with a 96 core is installed in a branch pipe of 10/8mm, and the air blowing distance is not less than 1500m. According to the requirement, each manufacturer domestic and overseas tries to manufacture the diameter of the optical cable to be smaller, while the air blowing distance only can be improved to 1000m, and the distance can not meet the requirements of users.

The optical cable is laid into the pipeline by the air blowing method. During the air blowing installation, air steams are used for pushing the optical cable to proceed along the pipeline. The optical cable is abraded by the inner wall of the pipeline and the impurities therein in the laying process. The printed letters on the surface of the optical cable can be abraded by the abrasion.

### Invention Contents

Aiming to overcome the defects of the prior art, an optical cable structure suitable for air blowing installation and the manufacturing method thereof are provided. The aims of air blowing distance and speed improvement are achieved through improving the structure of the outer surface of the optical cable for the optical cable structure, and the printed letters on the surface can be protected well.

The aims of the invention are realized through the following technical scheme: an optical cable structure suitable for air blowing installation comprises at least one optical fiber unit and a sheath coated on the optical fiber unit; at least one non-metal wire bundle is arranged between the sheath and the optical fiber unit; the adjacent part of the optical fiber unit comprises a reinforced rod and a filling rope; water-blocking substances are filled among the optical fiber unit, the reinforced rod and the filling rope; the optical fiber unit internally comprises at least one optical fiber; the surface of the sheath is provided with a plurality of convex or concave patterns; and letters are printed on the convex or concave patterns and between the convex or concave patterns, thus the printed letters can not be totally unclear because of abrasion; and the convex or concave patterns and the optical cable are in longitudinal and parallel arrangement, spiral arrangement with certain angle, or positive and reverse staggering spiral arrangement with certain angle.

Wherein, the optical fiber unit internally comprises at least one optical fiber, and the optical fiber unit comprises two configurations, the first configuration is that a loose buffer tube is coated on the optical fiber, and the loose buffer tube is filled with jelly; and the second configuration is that curing resin is coated on the optical fiber.

At least one non-metal wire bundle is arranged between the sheath and the optical fiber unit, and comprises one or multiple of binding yarn, a tearing rope, aramid yarn and glass fiber yarn; the binding yarn is spirally wound on the optical fiber unit, and is used for binding and fixing a plurality of optical fiber units; the tearing rope and the sheath are in parallel arrangement; and the optical fiber unit is coated by the aramid yarn.

The adjacent part of the optical fiber unit comprises a filling rope and a reinforced rod; the reinforced rod is used for reinforcing the stiffness of the optical cable; the outer diameter of the filling rope is the same with that of the optical fiber unit; and the filling rope surrounds the reinforced rod for ensuring the roundness of the cable core of the optical cable.

Water-blocking substances are filled around the optical fiber unit, the reinforced rod and the filling rope for preventing external water substances osmosis from flowing into the optical cable.

The manufacturing method of the optical cable suitable for air blowing installation, comprising the following steps:
(1) optical fiber coloring: paying the optical fiber out from a pay-off rack; coating a layer of ink on the surface of the optical fiber through an ink supply system under the effect of constant traction; and then carrying out photocuring on the surface of the optical fiber by using an ultraviolet light curing oven;
(2) optical fiber unit: paying the optical fiber out after coloring from the pay-off rack; coating the optical fiber in a sleeve extruded by a plastic extruding machine under the effect of the constant traction through the plastic extruding machine; or coating acrylate resin with certain shape on the surface of the optical fiber by a resin supplying and curing system, and curing the acrylate resin;
(3) cable laying: paying the optical fiber unit, the filling rope and the central reinforcing rod out from the special pay-off rack; enclosing the optical fiber unit and the filling rope around the central reinforcing rod through traction by a special twisting yarn binding device; and binding and fixing by the non-metal wire bundle, thus the cable core structure is stable and round off;
(4) sheath: paying the cable core out by the special pay-off rack; configuring a special-shaped mold which is required for the production of the sheath and is corresponding to the sheath on the plastic extruding machine, wherein the mold can rotate according to requirements in the plastic extruding process; forming the required convex or concave patterns on the surface of the sheath; drawing the optical cable subsequently through a water trough cooling system, thus the optical cable sheath layer is cooled and shaped; and then blowing the optical cable to be dry through a drying device;
(5) letter printing: printing letters on the dry surface of the optical cable by a letter-printing ink jet printer, wherein one part is at the optical cable convex part, and other part is at the optical cable concave part; and receiving the optical cable after letter printing on a special optical cable disc by a crawler.

The theory for improving the air blowing effect and increasing the air blowing distance for the invention is that supposing that the superficial area of a common air blowing optical cable in unit length is S1, and the cross section area is S2; the superficial area of the novel optical cable in the invention in unit length is S3, and the cross section area is S4, when the maximum outer diameters of two optical cables are same, we can come to the following conclusion that S1<S3, and S2>S4, and the air blowing optical cable is mainly subjected to the effects of four forces:
F1.The pushing force to the optical cable at the inlet of a micro pipe by an air blowing machine;
F2. The drag force formed by the friction between air streams and the surface of the optical cable;
F3. The resistance formed by the friction between the air streams and the surface of the optical cable;
F4. The resistance to the front end of the optical cable by the air pressure at the front of a pipeline.

So the immediate stress of the air blowing optical cable in the pipeline F=(F1 + F2)-(F3+F4)

F1 represents the pushing force formed to the optical cable by a pneumatic motor driven air streams generated by an air compressor, when the output power of the air compressor is fixed, the pushing force is regarded as invariant. The generation of F2 is related to the air flow rate entering the pipeline and the frictional force generated at the surface of the micro pipe for the air steams. Because the cross section area S4 of the novel optical cable is less than the cross section area S3 of the common optical cable, when the power of the air compressor is fixed, the air stream rate entering the pipeline is relatively greater during the novel optical cable is laid.

Because the surface of the novel optical cable has multiple concave surfaces, we can get that the superficial area S3 of the novel optical cable is greater than the superficial area S1 of the common optical cable, under the condition of same sheath material, the contact surface between the air streams and the surface of the novel optical cable is greater, furthermore, the air streams mentioned above are greater, the dragging force to the novel optical cable by the air streams is greater through the calculation of fluid mechanics. Additionally, because the surface of the novel optical cable has multiple concave grooves, when the air streams are acted on the concave grooves, not only is frictional force generated, and direct pushing force is generated because of the effect of component force, the novel optical cable can obtain greater air steam pushing force than the common optical cable in air blowing installation.

For F3, because the sheath materials of the two optical cables are the same, the friction coefficients generated of the optical cable and the inner wall of the pipeline are the same, while the novel optical cable is lighter, the friction resistance is less.

F4 represents the resistance to the front end of the optical cable by the air pressure at the front of the pipeline, and is less related to the appearances of the two optical cables, but the air stream rate entering the pipeline by the air blowing machine can not be required to be increased too early when the air blowing begins, and additional resistance is avoided by the over-high air pressure in front when the optical cable is subjected to air blowing.

Through the comparison above, when the maximum outer diameters and the output power of the air compressor are same for the two optical cables, the stress provided by the invention is greater than that of the common optical cable, which is the reason that the air blowing distance is far greater than that of the common optical cable in the same pipeline.

The optical cable structure suitable for air blowing installation and the manufacturing method thereof provided by the invention have the beneficial effects that the air blowing distance of the optical cable can be enhanced greatly, the construction period can be shortened, the construction cost can be lowered, and the printed letters on the surface can be protected effectively.

### Brief Description of Drawings

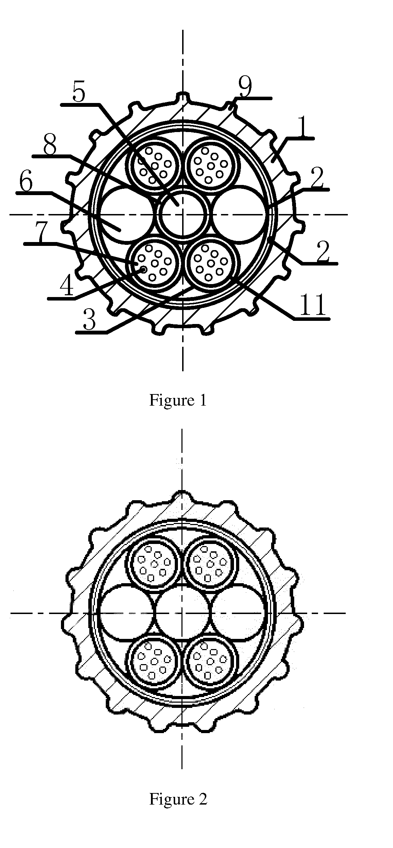

Figure 1 shows the cross-section view of rectangular concave patterns of the invention
Figure 2 shows the cross-section view of circular arc concave patterns of the invention

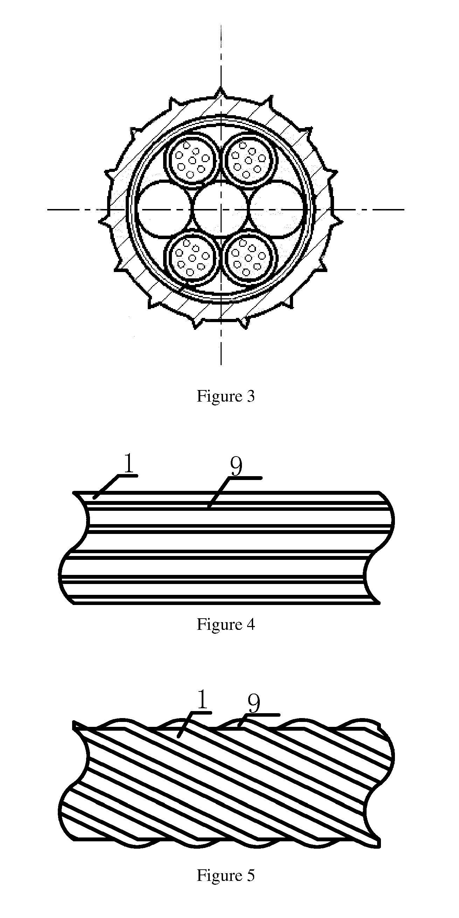

Figure 3 shows the cross-section view of triangular concave patterns of the invention
Figure 4 shows the structural view of concave patterns in longitudinal parallel arrangement of the invention
Figure 5 shows the structural view of concave patterns in longitudinal arrangement with certain angle of the invention

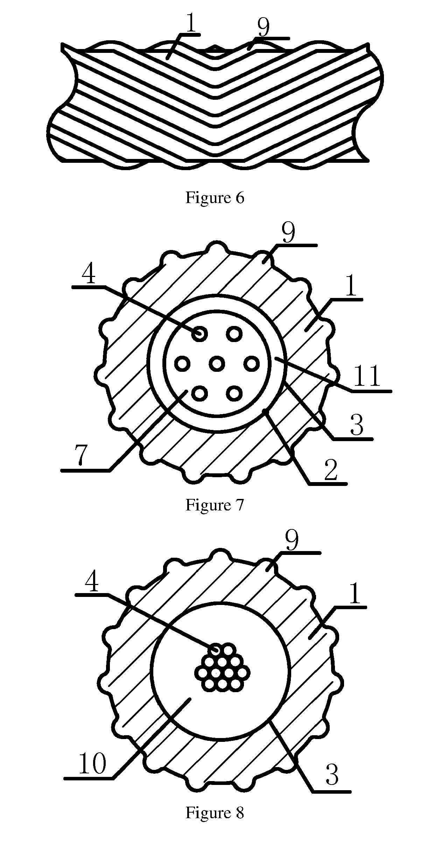

Figure 6 shows the structural view of concave patterns in longitudinal and positive and reverse staggering spiral arrangement with certain angle of the invention
Figure 7 shows the structural view of an optical fiber unit and a non-metal wire bundle of the invention
Figure 8 shows the structural view of an optical fiber unit of the invention

In the figure, 1-sheath, 2-non-metal wire bundle, 3-optical fiber unit, 4-optical fiber, 5-reinforced rod, 6-filling rope, 7- jelly, 8-water-blocking substances, 9-convex or concave patterns, 10-curing resin, 11-loose buffer tube.

### Particular Embodiments

The invention is described in detail by combining the drawings as below. As shown by the figure (1), the optical cable structure suitable for air blowing installation comprises at least one optical fiber unit (3) and a sheath (1) coated on the optical fiber unit (3); the optical fiber unit (3) internally comprises at least one optical fiber (4)and is also internally filled with jelly(7); the surface of the sheath (1) is provided with a plurality of convex or concave patterns, and letters are printed on the convex patterns and between the convex patterns, thus the printed letters can not be totally unclear because of abrasion; a non-metal wire bundle (2) is arranged between the sheath (1) and the optical fiber unit (3), and is formed by the winding of water-blocking binding yarn and a tearing rope; the binding yarn is spirally wound on the optical fiber unit (3); the tearing rope and the sheath (1) are in parallel arrangement; the adjacent part of the optical fiber unit (3) comprises a filling rope (6) and a reinforced rod (5); water-blocking substances (8) are arranged on the reinforced rod and are water-blocking yarn; the cross section of the convex pattern (9) is rectangular; additionally the cross section of convex pattern (9) also can be circular arc shown as the figure (2) and can be trangular shown as the figure (3); the arrangement of the convex pattern (9) on the optical cable can be shown as the figure (4) of the convex pattern (9) and the optical cable in longitudinal arrangement, can be shown as the figure (5) of the convex pattern (9) and the optical cable in longitudinal spiral arrangement with certain angle, and also can be shown as the figure (6) of the convex pattern (9) and the optical cable in longitudinal and positive and reverse staggering spiral arrangement with certain angle

The optical structure also can be a structure which is shown by figure (7), and is not provided with a reinforced rod (5), a filling rope (6) and water-blocking substances, and comprises an optical fiber unit and a sheath (1) coated on the optical fiber unit (3); the optical fiber unit (3) is internally provided with at least one optical fiber (4), and is also filled with jelly (7); the surface of the sheath (1) is provided with a plurality of convex or concave patterns (9); letters are printed on the convex patterns (9) and between the convex patterns (9), thus the printed letters can not be totally unclear because of abrasion; at least one non-metal wire bundle (2) is arranged between the sheath (1) and the optical fiber unit (3), and is a tearing rope.

The optical structure also can be a structure shown by figure (8). Curing resin (10) is coated on the optical fiber (4); optical cable structure comprises an optical fiber unit (3) and a sheath coated on the optical fiber unit (3); the optical fiber unit (3) internally comprises at least one optical fiber (4); ultraviolet light curing acrylate resin (10) is coated on the optical fiber (4); the surface of the sheath is provided with a plurality of convex or concave patterns, and letters are printed on the convex patterns (9) and between the convex patterns (9), thus the printed letters can not be totally unclear because of abrasion.

The manufacturing method of the optical cable suitable for air blowing installation, comprising the following steps:
(1) optical fiber coloring: paying the optical fiber out from a pay-off rack; coating a layer of ink on the surface of the optical fiber through an ink supply system under the effect of constant traction; and then carrying out photocuring on the surface of the optical fiber by using an ultraviolet light curing oven;
(2) optical fiber unit: paying the optical fiber out after coloring from the pay-off rack; coating the optical fiber in a sleeve extruded by a plastic extruding machine under the effect of the constant traction through the plastic extruding machine; or coating acrylate resin with certain shape on the surface of the optical fiber by a resin supplying and curing system, and curing the propylene resin;
(3) cable laying: paying the optical fiber unit, the filling rope and the central reinforcing rod out from the special pay-off rack; enclosing the optical fiber unit and the filling rope around the central reinforcing rod through traction by a special twisting yarn binding device; and binding and fixing by the non-metal wire bundle, thus the cable core structure is stable and round off;
(4) sheath: paying the cable core out by the special pay-off rack; configuring a special-shaped mold which is required for the production of the sheath and is corresponding to the sheath on the plastic extruding machine, wherein the mold can rotate according to requirements in the plastic extruding process; forming the required convex or concave patterns on the surface of the sheath; drawing the optical cable subsequently through a water trough cooling system, thus the optical cable sheath layer is cooled and shaped; and then blowing the optical cable to be dry through a drying device;
(5) letter printing: printing letters on the dry surface of the optical cable by a letter-printing ink jet printer, wherein one part is at the optical cable convex part, and other part is at the optical cable concave part; and receiving the optical cable after letter printing on a special optical cable disc by a crawler.

## Claims

1. The optical cable structure suitable for air blowing installation is **characterized by** comprising at least one optical fiber unit (3) and a sheath (1) which is coated on the optical fiber unit (3); at least one non-metal wire bundle (2) is arranged between the sheath (1) and the optical fiber unit (3); the adjacent part of the optical fiber unit (3) comprises a reinforced rod (5) and a filling rope (6); water-blocking substances are filled among the optical fiber unit (3), the reinforced rod(5) and the filling rope (6); the optical fiber unit (3) internally comprises at least one optical fiber (4); the surface of the sheath (1) is provided with a plurality of convex or concave patterns (9); and letters are printed on the convex or concave patterns (9) and between the convex or concave patterns (9).

2. The optical cable structure suitable for air blowing installation according to claim 1 is **characterized in that** the non-metal wire bundle (2) comprises one or multiple of binding yarn, a tearing rope, aramid yarn and glass fiber yarn; the binding yarn is spirally wound on the optical fiber unit (3); the tearing rope and the sheath (1) are in parallel arrangement; and the optical fiber unit (3) is coated by the aramid yarn.

3. The optical cable structure suitable for air blowing installation according to claim 1 is **characterized in that** a loose buffer tube(11) is coated on the optical fiber (4), and is also filled with jelly (7).

4. The optical cable structure suitable for air blowing installation according to claim 1, **characterized in that** curing resin (10) is coated on the optical fibers (4).

5. The optical cable structure suitable for air blowing installation according to claim 1, **characterized in that** the convex or concave patterns (9) and the optical cable are in longitudinal and parallel arrangement.

6. The optical cable structure suitable for air blowing installation according to claim 1, **characterized in that** the convex or concave patterns (9) and the optical cable are in spiral arrangement with certain angle, or positive and reverse staggering spiral arrangement with certain angle.

7. The manufacturing method of the optical cable suitable for air blowing installation, **characterized by** comprising the following steps:
(1) optical fiber coloring: paying the optical fiber out from a pay-off rack; coating a layer of ink on the surface of the optical fiber through an ink supply system under the effect of constant traction; and then carrying out photocuring on the surface of the optical fiber by using an ultraviolet light curing oven;
(2) optical fiber unit: paying the optical fiber out after coloring from the pay-off rack; coating the optical fiber in a sleeve extruded by a plastic extruding machine under the effect of the constant traction through the plastic extruding machine ;or coating acrylate resin with certain shape on the surface of the optical fiber by a resin supplying and curing system, and curing the acrylate resin;
(3) cable laying: paying the optical fiber unit, the filling rope and the central reinforcing rod out from the special pay-off rack; enclosing the optical fiber unit and the filling rope around the central reinforcing rod through traction by a special twisting yarn binding device; and binding and fixing by the non-metal wire bundle, thus the cable core structure is stable and round off;
(4) sheath: paying the cable core out by the special pay-off rack; configuring a special-shaped mold which is required for the production of the sheath and is corresponding to the sheath on the plastic extruding machine, wherein the mold can rotate according to requirements in the plastic extruding process; forming the required convex or concave patterns on the surface of the sheath; drawing the optical cable subsequently through a water trough cooling system, thus the optical cable sheath layer is cooled and shaped; and then blowing the optical cable to be dry through a drying device;
(5) letter printing: printing letters on the dry surface of the optical cable by a letter-printing ink jet printer, wherein one part is at the optical cable convex part, and other part is at the optical cable concave part; and receiving the optical cable after letter printing on a special optical cable disc by a crawler.
